# EUROPÄISCHE PATENTSCHRIFT

(11) **EP 2 445 783 B1**
(45) Veröffentlichungstag und Bekanntmachung des Hinweises auf die Patenterteilung: **01.05.2013**
(21) Anmeldenummer: 10720594.0
(22) Anmeldetag: 17.05.2010
(51) Int. Cl.: B63H 5/10, B63H 21/17, B63H 21/20

(54) **SCHIFF MIT ZWEI HINTEREINANDER ANGEORDNETEN PROPELLERN**
SHIP HAVING TWO PROPELLERS ARRANGED ONE BEHIND THE OTHER
BATEAU DOTE DE DEUX HELICES DISPOSEES L'UNE DERRIERE L'AUTRE

(30) Priorität: 22.06.2009 DE 102009030112
(43) Veröffentlichungstag der Anmeldung: 02.05.2012
(73) Patentinhaber: Siemens Aktiengesellschaft, 80333 München (DE)
(72) Erfinder: TIGGES, Kay, 21698 Harsefeld (DE)
(86) Internationale Anmeldenummer: PCT/EP2010/056681
(87) Internationale Veröffentlichungsnummer: WO 2010/149429

(56) Entgegenhaltungen:
- DE-A1- 4 441 604

## Beschreibung

Die Erfindung betrifft eine Schiff mit zwei hintereinander angeordneten Propellern gemäß Oberbegriff des Patentanspruchs 1; ein derartiges Schiff ist beispielsweise aus der DE 44 41 604 A1 bekannt, die als nächsliegender Stand der Technik angesehen wird.

Die DE 44 41 604 A1 offenbart eine Schiff mit einem ersten Propeller und einem zweiten Propeller, die in Fahrtrichtung des Schiffes betrachtet hintereinander angeordnet sind. Eine derartige Anordnung wird häufig auch als "Tandempropeller-Anordnung" bezeichnet. Üblicherweise dient dabei der zweite Propeller als Hauptpropeller und der erste Propeller als Zusatzpropeller. Der erste Propeller wird dabei über eine Propellerwelle in Form einer Hohlwelle von einem innerhalb des Schiffes angeordneten elektrischen Motor angetrieben. Das Schiff weist hierzu eine Hülle mit einer Öffnung auf, über die die Hohlwelle aus dem Schiff heraus geführt ist. Der zweite Propeller wird über eine Welle von einem ebenfalls innerhalb des Schiffes angeordneten Verbrennungsmotor angetrieben, der üblicherweise ein Dieselmotor ist. Die Welle des zweiten Propellers verläuft dabei im Hohlraum der Hohlwelle des ersten Propellers und ist in der Hohlwelle durch ein oder mehrere Lager gelagert.

Aufgrund der voneinander unabhängigen Antriebsmotoren sind die beiden Propeller auch unabhängig voneinander antreibbar und können dabei gleich und/oder gegenläufig rotieren. Neben hydrodynamischen Vorteilen hat eine derartige Anordnung insbesondere den Vorteil, dass bei einem Ausfall eines der beiden Motoren noch der andere Motor betriebsbereit bleibt, so dass das Schiff nicht antriebslos im Wasser herumtreibt. Dieser Vorteil geht jedoch bei einem Ausfall der Hohlwellenlagerung verloren, da hiervon beide Antriebsysteme betroffen sind.

Dieses Problem kann dadurch umgangen werden, dass der Zusatzpropeller in Fahrtrichtung des Schiffes hinter dem Hauptpropeller angeordnet wird, und von einem Motor angetrieben wird, der in einem Ruder untergebracht ist, welches in Fahrtrichtung des Schiffes hinter dem Hauptpropeller angeordnet ist. Eine derartige Lösung ist beispielsweise aus der EP 0 117 881 A1 und der WO 00/27696 bekannt. Dies erfordert jedoch umfangreiche konstruktive Eingriffe am Ruder und einen Tausch in der Anordnung der beiden Propeller.

Ausgehend hiervon ist es Aufgabe vorliegender Erfindung, bei einem Schiff gemäß Oberbegriff des Patentanspruchs 1 die Ausfallsicherheit zu erhöhen, ohne dass hierfür konstruktive Änderungen am Ruder notwendig sind.

Die Lösung dieser Aufgabe gelingt durch ein Schiff mit den Merkmalen des Patentanspruchs 1. Vorteilhafte Ausgestaltungen sind jeweils Gegenstand der Unteransprüche.

Erfindungsgemäß ist der elektrische Motor außerhalb des Schiffes zwischen der Öffnung in der Schiffshülle und dem zweiten Propeller angeordnet und weist eine Öffnung auf, durch die die Propellerwelle zum Antrieb des zweiten Propellers verläuft.

Da sich der elektrische Motor nicht innerhalb, sondern außerhalb des Schiffes befindet, muss für den Antrieb des ersten Propellers keine Welle durch die Schiffshülle geführt werden. Es wird somit keine Hohlwelle für den Antrieb des ersten Propellers und entsprechend keine Lagerung der Welle zum Antrieb des zweiten Propellers in einer derartigen Hohlwelle benötigt. Es liegen somit zwei voneinander unabhängige Antriebssysteme vor, so dass bei einem Ausfall eines der beiden Antriebssysteme die Funktionsfähigkeit des anderen Antriebssystems nicht beeinträchtigt wird. Dabei können die vorteilhaften hydrodynamischen Eigenschaften und die Reihenfolge in der Anordnung der Propeller beibehalten werden. Eingriffe am Ruder sind nicht notwendig.

Bevorzugt ist der elektrische Motor als ein Außenläufermotor mit einem Stator und einem um den Stator laufenden Läufer ausgebildet, wobei der Stator mit der Hülle des Schiffes und der Läufer mit dem ersten Propeller verbunden ist und wobei der Stator die Öffnung ausbildet, durch die die Propellerwelle zum Antrieb des zweiten Propellers verläuft.

Der Stator kann hierzu in Form eines Hohlzylinders ausgebildet sein, wobei die Propellerwelle zum Antrieb des Hauptpropellers durch den Hohlraum des Hohlzylinders verläuft. Vorzugsweise ist der Stator dabei ringförmig ausgebildet, d.h. als ein Hohlzylinder, dessen axiale Ausdehnung kleiner ist als dessen radiale Ausdehnung. Der von der Ringinnenseite umfasste Raum bildet dann die Öffnung, durch die die Propellerwelle zum Antrieb des Hauptpropellers verläuft. Der Motor benötigt dann in Richtung der Propellerwelle nur wenig Platz, so dass der erste und der zweite Propeller dicht hintereinander angeordnet werden können, wodurch sich hydrodynamische Vorteile ergeben. Zudem kann der Motor aufgrund seines relativ großen Durchmessers auf ein besonders hohes Drehmoment ausgelegt werden.

Der Läufer ist bevorzugt ebenfalls ringförmig ausgebildet. Wenn sowohl Stator als auch Läufer ringförmig ausgebildet sind, bilden sie einen in der Fachliteratur häufig als Elektroringmotor oder als "Rim Drive" bezeichneten Motor.

Vorzugsweise weist der Läufer Permanentmagnete als elektromagnetisch aktive Teile auf, wodurch eine hohe Leistungsdichte möglich ist.

Die Propellerflügel des ersten Propellers können dabei direkt an dem Läufer angeordnet sein, wodurch sich eine besonders kompakte Propeller-Motor-Einheit ergibt, die in Richtung der Propellerwelle des zweiten Propellers nur wenig Platz benötigt.

Der erste und der zweite Propeller können dabei voneinander unabhängig gleich- und/oder gegenläufig drehend sein.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert; darin zeigen:
FIG 1 das Heck eines erfindungsgemäßen Schiffes
FIG 2 den Aufbau des elektrischen Zusatzantriebes von FIG 1.

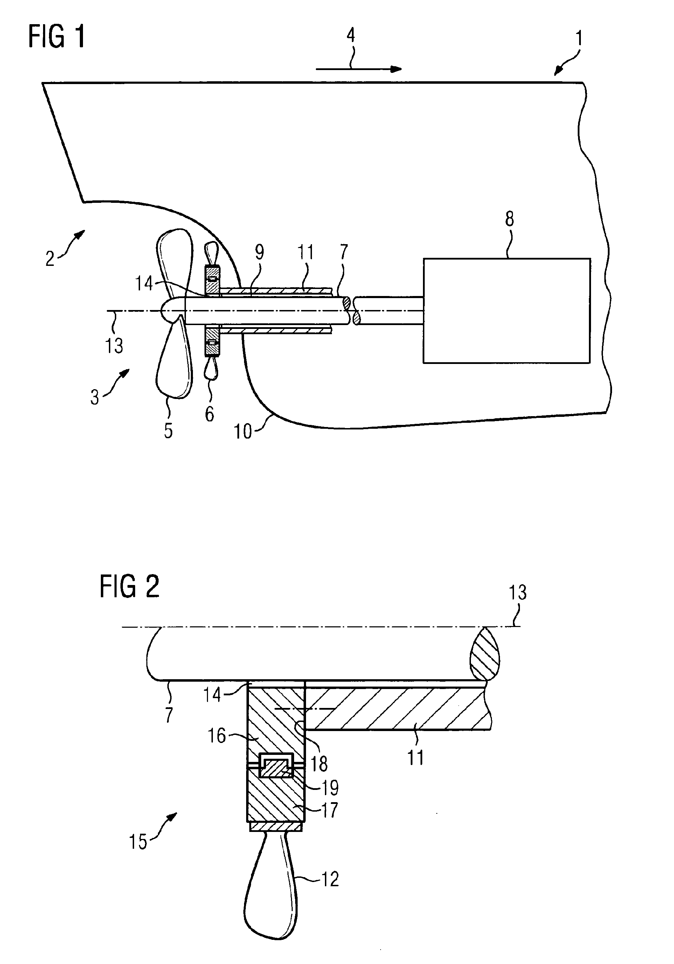

Eine in FIG 1 gezeigte Schiffspropulsionsanlage 3 ist im Heck 2 eines nur teilweise dargestellten Schiffes 1 angeordnet. Die Schiffspropulsionanlage 3 umfasst zwei in Fahrtrichtung 4 des Schiffes 1 koaxial hintereinander angeordnete Propeller 5, 6.

Der in Fahrtrichtung 4 betrachtet hintere Propeller 5 ist ein Hauptpropeller zum Antrieb des Schiffes 1. Er wird mittels einer Propellerwelle 7 von einem Motor 8, beispielsweise von einem Dieselmotor oder einem elektrischen Motor, angetrieben, der sich innerhalb des Schiffes 1 befindet. Die Propellerwelle 7 ist hierzu durch eine Öffnung 9 in der Schiffshülle 10 aus dem Schiff 1 heraus geführt. Die Öffnung 9 ist üblicherweise durch ein sogenanntes Stevenrohr 11 ausgebildet.

Der in Fahrtrichtung 4 betrachtete vordere Propeller 6 ist ein Zusatzpropeller. Wie im Detail in FIG 2 gezeigt ist, wird er von einem elektrischen Motor 15 angetrieben, der außerhalb des Schiffes 3 zwischen der Öffnung 9 in der Schiffshülle 10 und dem Hauptpropeller 5 angeordnet ist. Der elektrische Motor 15 ist als ein Außenläufermotor mit einem ringförmigen Stator 16 und einem um den Stator 16 laufenden, ringförmigen Läufer 17 ausgebildet ist. Der Läufer 17 ist hierzu über nicht näher dargestellte Lager auf dem Stator 16 gelagert. Der Stator 16 ist in nicht näher dargestellter Weise an der außerbordigen Stirnseite 18 des Stevensrohres 11 befestigt (z.B. an der Stirnseite 18 festgeschraubt).

Der Propeller 6 weist Propellerblätter 12 auf, die an der ringförmigen Außenseite des Läufers 17 angeordnet sind. Der elektrische Motor 15 bildet mit den darauf angeordneten Propellerblättern 12 somit eine sehr kompakte Propeller-Motor-Einheit, die in Fahrtrichtung 4 bzw. Richtung der Propellerwelle 7 nur wenig Platz beansprucht.

Der elektrische Motor 15 und folglich der Propeller 6 ist dabei koaxial zu der Drehachse 13 der Propellerwelle 7 und zu dem Hauptpropeller 5 angeordnet. Durch die ringförmige Innenseite des Stators 16 ist eine Öffnung 14 ausgebildet, durch die die Propellerwelle 7 zum Antrieb des Hauptpropellers 5 verläuft. Der Durchmesser der Öffnung 14 ist hierzu größer als der Durchmesser der Propellerwelle 7.

Bei dem elektrischen Motor 15 handelt es sich um einen in der Fachliteratur häufig als Elektroringmotor oder "Rim Drive" bezeichneten Motor. Der Stator 16 weist als elektromagnetisch aktive Teile beispielsweise stromdurchflossene Wicklungen auf, wobei der Strom über nicht näher dargestellte Stromversorgungsleitungen zu dem Stator 16 geführt wird. Die Stromversorgungsleitungen können beispielsweise im Bereich des Stevenrohrs 11 durch die Hülle 10 aus dem Schiffsinneren zu dem Stator 16 geführt werden. Der Läufer 17 weist als elektromagnetisch aktive Teile beispielsweise Permanentmagnete 19 auf.

Der Zusatzpropeller 6 und der Hauptpropeller 5 können voneinander unabhängig gleich- und/oder gegenläufig drehend sein.

Bei einem Ausfall des Hauptpropellerantriebs, zum Beispiel bei einem Ausfall des Motors 8 oder der Lagerung der Propellerwelle 7, bleibt der Zusatzpropellerantrieb weiterhin funktionsfähig, so dass das Schiff 1 weiterhin angetrieben werden kann. Gleiches gilt umgekehrt auch bei einem Ausfall des Zusatzpropellerantriebs. Die Ausfallsicherheit des Schiffes kann hierdurch deutlich erhöht werden.

## Patentansprüche

1. Schiff (1) mit
- einem ersten Propeller (6) und einem zweiten Propeller (5), die in Fahrtrichtung (4) des Schiffes (3) hintereinander angeordnet sind,
- einem elektrischen Motor (15) zum Antrieb des ersten Propellers (6),
- einer Antriebseinheit (8) zum Antrieb des zweiten Propellers (5), wobei
- die Antriebseinheit (8) innerhalb des Schiffes (3) angeordnet ist und über eine Propellerwelle (7) mit dem zweiten Propeller (5) zu dessen Antrieb verbunden ist,
- das Schiff (1) eine Hülle (10) mit einer Öffnung (9) aufweist, über die die Propellerwelle (7) aus dem Schiff (1) heraus geführt ist,
**dadurch gekennzeichnet, dass** der elektrische Motor (15) außerhalb des Schiffes (3) zwischen der Öffnung in der Hülle (10) des Schiffes (1) und dem zweiten Propeller (5) angeordnet ist und dass er eine Öffnung (14) aufweist, durch die die Propellerwelle (7) zum Antrieb des zweiten Propellers (5) verläuft.

2. Schiff (1) nach Anspruch 1,
**dadurch gekennzeichnet, dass** der elektrische Motor (15) als ein Außenläufermotor mit einem Stator (16) und einem um den Stator (16) laufenden Läufer (17) ausgebildet ist, wobei der Stator (16) mit der Hülle (10) des Schiffes (1) und der Läufer (17) mit dem ersten Propeller (6) verbunden ist, und wobei der Stator (16) die Öffnung (14) ausbildet, durch die die Propellerwelle (7) zum Antrieb des zweiten Propellers (5) verläuft.

3. Schiff (1) nach Anspruch 2,
**dadurch gekennzeichnet, dass** der Stator (16) ringförmig ausgebildet ist.

4. Schiff (1) nach Anspruch 2 oder 3,
**dadurch gekennzeichnet, dass** der Läufer (17) ringförmig ausgebildet ist.

5. Schiff (1) nach einem der Ansprüche 2 bis 4,
**dadurch gekennzeichnet, dass** der Läufer (17) drehbar auf dem Stator (16) gelagert ist

6. Schiff (1) nach einem der Ansprüche 2 bis 5,
**dadurch gekennzeichnet, dass** der Läufer (17) Permanentmagnete (19) als elektromagnetisch aktive Teile aufweist.

7. Schiff (1) nach einem der Ansprüche 2 bis 6,
**dadurch gekennzeichnet, dass** der erste Propeller (6) mehrere Propellerflügel (18) aufweist, die an dem Läufer (17) angeordnet sind.

8. Schiff (1) nach einem der vorhergehenden Ansprüche,
**dadurch gekennzeichnet, dass** der erste Propeller (6) und der zweite Propeller (5) voneinander unabhängig gleich- und/oder gegenläufig drehend sind.

## Claims

1. Ship (1) with
- a first propeller (6) and a second propeller (5), which are disposed one behind the other in the direction of travel (4) of the ship (3),
- an electric motor (15) for driving the first propeller (6),
- a drive unit (8) for driving the second propeller (5), wherein
- the drive unit (8) is disposed within the ship (3) and is connected via a propeller shaft (7) to the second propeller (5) to drive the latter,
- the ship (1) has a hull (10) with an opening (9) via which the propeller shaft (7) is led out of the ship (1),
**characterised in that** the electric motor (15) is disposed (15) outside the ship (3) between the opening (9) in the hull (10) of the ship (1) and the second propeller (5) and that it has an opening (14), through which the propeller shaft (7) for driving the second propeller (5) runs.

2. Ship (1) according to claim 1,
**characterised in that** the electric motor (15) is embodied as an external-rotor motor with a stator (16) and a rotor (17) running around the stator (16), wherein the stator (16) is connected to the hull (10) of the ship (1) and the rotor (17) is connected to the first propeller (6), and wherein the stator (16) embodies the opening (14) through which the propeller shaft (7) for driving the second propeller (5) runs.

3. Ship (1) according to claim 2,
**characterised in that** the stator (16) is embodied in a ring shape.

4. Ship (1) according to claim 2 or 3,
**characterised in that** the rotor (17) is embodied in a ring shape.

5. Ship (1) according to one of claims 2 to 4, **characterised in that** the rotor (17) is supported rotatably on the stator (16).

6. Ship (1) according to one of claims 2 to 5, **characterised in that** the rotor (17) has permanent magnets (19) as electromagnetically active parts.

7. Ship (1) according to one of claims 2 to 6,
**characterised in that** the first propeller (6) has a number of propeller blades (18) which are arranged on the rotor (17).

8. Ship (1) according to one of the preceding claims,
**characterised in that** the first propeller (6) and the second propeller (5) rotate independently of one another in the same direction and/or are contra rotating.

## Revendications

1. Bateau ( 1 ) ayant
- une première hélice ( 6 ) et une deuxième hélice ( 5 ) qui sont disposées l'une derrière l'autre dans la direction ( 4 ) du déplacement du bateau ( 3 ),
- un moteur ( 15 ) électrique pour l'entraînement de la première hélice ( 6 ),
- un groupe ( 8 ) d'entraînement pour l'entraînement de la deuxième hélice ( 5 ), dans lequel
- le groupe ( 8 ) d'entraînement est disposé à l'intérieur du bateau ( 3 ) et est relié par un arbre ( 7 ) d'hélice à la deuxième hélice ( 5 ) pour son entraînement,
- le bateau ( 1 ) a une coque ( 10 ) ayant une ouverture ( 9 ) par laquelle l'arbre ( 7 ) d'hélice sort du bateau ( 1 ),
**caractérisé en ce que** le moteur ( 15 ) électrique est disposé à l'extérieur du bateau ( 3 ) entre l'ouverture dans la coque ( 10 ) du bateau ( 1 ) et la deuxième hélice ( 5 ) et **en ce qu'**il a une ouverture ( 14 ) dans laquelle l'arbre ( 7 ) d'hélice s'étend pour l'entraînement de la deuxième hélice ( 5 ).

2. Bateau ( 1 ) suivant la revendication 1,
**caractérisé en ce que** le moteur ( 15 ) électrique est constitué sous la forme d'un moteur à rotor extérieur ayant un stator ( 6 ) et un rotor ( 17 ) tournant autour du stator, le stator ( 16 ) étant relié à la coque ( 10 ) du bateau ( 1 ) et le rotor ( 17 ) à la première hélice ( 6 ) et le stator ( 16 ) forme l'ouverture ( 14 ) dans laquelle l'arbre ( 7 ) d'hélice s'étend pour l'entraînement de la deuxième hélice ( 5 ).

3. Bateau ( 1 ) suivant la revendication 2,
**caractérisé en ce que** le stator ( 16 ) est constitué de manière annulaire.

4. Bateau ( 1 ) suivant la revendication 2 ou 3,
**caractérisé en ce que** le rotor ( 17 ) est constitué de manière annulaire.

5. Bateau ( 1 ) suivant l'une des revendications 2 à 4,
**caractérisé en ce que** le rotor ( 7 ) est monté tournant sur le stator ( 16 ).

6. Bateau ( 1 ) suivant l'une des revendications 2 à 5,
**caractérisé en ce que** le rotor ( 17 ) a des aimants ( 19 ) permanents comme partie active électromagnétiquement.

7. Bateau ( 1 ) suivant l'une des revendications 2 à 6,
**caractérisé en ce que** la première hélice ( 6 ) à plusieurs ailes ( 18 ) d'hélice, qui sont montées sur le rotor ( 17 ).

8. Bateau ( 1 ) suivant des revendications précédentes,
**caractérisé en ce que** la première hélice ( 6 ) et la deuxième hélice ( 5 ) sont tournantes dans le même sens et/ou en sens contraire indépendamment l'une de l'autre.
